(19) Europäisches Patentamt
European Patent Office
Office européen des brevets

(11) **EP 1 812 780 B1**

(12) **EUROPÄISCHE PATENTSCHRIFT**

(45) Veröffentlichungstag und Bekanntmachung des Hinweises auf die Patenterteilung:
**17.08.2016   Patentblatt 2016/33**

(51) Int Cl.:
***G01N 19/04*** *(2006.01)*

(21) Anmeldenummer: **05808187.8**

(22) Anmeldetag: **11.11.2005**

(86) Internationale Anmeldenummer:
**PCT/EP2005/012351**

(87) Internationale Veröffentlichungsnummer:
**WO 2006/050996 (18.05.2006 Gazette 2006/20)**

(54) **VERFAHREN UND VORRICHTUNG ZUM PRÜFEN DER FESTIGKEIT EINER VERBINDUNG MITTELS ZENTRIFUGALKRAFT**

METHOD AND DEVICE FOR EXAMINING THE RESISTANCE OF A CONNECTION BY MEANS OF A CENTRIFUGAL FORCE

PROCEDE ET DISPOSITIF POUR CONTROLER LA RESISTANCE D'UNE LIAISON A L'AIDE DE LA FORCE CENTRIFUGE

(84) Benannte Vertragsstaaten:
**DE FR GB IT**

(30) Priorität: **11.11.2004  DE 102004055621**

(43) Veröffentlichungstag der Anmeldung:
**01.08.2007   Patentblatt 2007/31**

(73) Patentinhaber: **BAM Bundesanstalt für Materialforschung und -prüfung
12205 Berlin (DE)**

(72) Erfinder:
• **BECK, Uwe
  14612 Falkensee (DE)**
• **REINERS, Georg
  14163 Berlin (DE)**
• **BERNDT, Christian
  12169 Berlin (DE)**
• **GRUNE, Sylke
  09111 Chemnitz (DE)**
• **UHLENDORF, Rüdiger
  37127 Dransfeld (DE)**

(74) Vertreter: **Wehlan, Helmut et al
  Patentanwälte Wehlan & Wehlan
  Möllendorffstrasse 49
  10367 Berlin (DE)**

(56) Entgegenhaltungen:
**DE-A1- 19 538 388    US-A- 4 143 543**

• **DATABASE WPI Section EI, Week 198523 Derwent Publications Ltd., London, GB; Class S03, AN 1985-140508 XP002366309 -& SU 1 126 843 A (ORSHANSK TRACTOR RE) 30. November 1984 (1984-11-30)**
• **PATENT ABSTRACTS OF JAPAN Bd. 1999, Nr. 14, 22. Dezember 1999 (1999-12-22) -& JP 11 258081 A (RICOH CO LTD), 24. September 1999 (1999-09-24)**
• **PATENT ABSTRACTS OF JAPAN Bd. 1999, Nr. 08, 30. Juni 1999 (1999-06-30) -& JP 11 064212 A (RICOH CO LTD), 5. März 1999 (1999-03-05)**
• **PATENT ABSTRACTS OF JAPAN Bd. 2003, Nr. 05, 12. Mai 2003 (2003-05-12) -& JP 2003 021592 A (MATSUSHITA ELECTRIC WORKS LTD), 24. Januar 2003 (2003-01-24)**
• **PATENT ABSTRACTS OF JAPAN Bd. 018, Nr. 005 (P-1669), 7. Januar 1994 (1994-01-07) -& JP 05 249028 A (KANSAI PAINT CO LTD), 28. September 1993 (1993-09-28)**
• **PATENT ABSTRACTS OF JAPAN Bd. 016, Nr. 117 (P-1328), 24. März 1992 (1992-03-24) -& JP 03 287048 A (FUJITSU LTD), 17. Dezember 1991 (1991-12-17)**

EP 1 812 780 B1

**Beschreibung**

Die Erfindung betrifft ein Verfahren nach dem Oberbegriff des Anspruchs 1 sowie eine Vorrichtung zur Durchführung dieses Verfahrens.

Zur Bewertung der Haftfestigkeit von Beschichtungen gibt es eine Vielzahl von Verfahren. Diese sind genauso verschiedenartig wie die möglichen Kombinationen von Substrat- und Schichtmaterialien in Abhängigkeit von den interessierenden bzw. notwendigen Schichtdicken- und Haftfestigkeitsbereichen.

Als Beispiele für die Vielfalt der möglichen Applikationen sind mechanisch extrem beanspruchte Mehrschichtsysteme (z.B. Wendeschneidplatten, Substrat Stahl), optische Vielschichtsysteme (z.B. dielektrische Spiegel, Substrat Glas), elektrische Abschirmungen bzw. Leitbahnen (z.B. Handy-Gehäuse und Leiterplatten, Substrat Kunststoff), optische und hermetisierende Metallisierungen (z.B. Reflektoren und Verpackungsmaterial, Substrat Kunststoff als Formkörper und als Folie) zu nennen.

Beispiele relativ weit verbreiteter Verfahren zur Bewertung der Haftfestigkeit sind z.B. der Radiergummi-test (ISO 9211-4), der Scratch-Test (Ritz-Test, DIN V ENV 1071-3, ISO 1518, ASTM D 2197), der Pull-off-Test (Stirn-Abzugstest, ISO/DIS 4624, ASTM D 4541), der Peel-Test (Schäl-Test, ASTM B 533, DIN 53494, DIN 58196-6, ISO 14676, DIN 53282, ISO 4578) und der Rockwell-C-Test (DIN EN ISO 6508-1, VDI Richtlinie 3198).

Das US-Patent 4,143,543 beschreibt ein Verfahren zum Prüfen der Festigkeit einer Verbindung zwischen zwei Körpern, von denen der eine Körper eine geringe Masse, wobei eine entsprechende gerichtete Kraft auf die Verbindung bis zu deren Lösung ausgeübt wird. Dabei erfolgt die Aufnahme der Zentrifugalkraft im Rotorarm auf der von der eigentlichen Prüffläche aus gesehen der Rotationsachse zugewandten Seite. Der Nachteil ist, dass der Rotorarm somit der vollen Beanspruchung aller Massen standhalten muss.

Die Haftfestigkeit (kritische Haftkraft pro Fläche) als physikalische Größe wird dabei streng genommen nur beim Pull-off-Test bestimmt. Dafür muss ein Abzugsstempel aufgeklebt werden. Dieser wird dann in einer Zugprüfung beansprucht. Der Pull-off-Test wird in der Praxis, jedenfalls zur routinemäßigen Qualitätskontrolle, kaum verwendet, weil es sich immer um eine Einzelprüfung handelt, eine registrierende Zugprüfeinrichtung mit doppelt kardanischer Aufhängung von Substrat und Abzugs-Stempel erforderlich ist und die Reproduzierbarkeit der Montage in der Zugprüfeinrichtung kritisch ist. Auch können die Aussagen bei schräger linienhaft-inhomogener, also nicht flächenhaft-konstanter Krafteinleitung stark verfälscht sein.

Die anderen beispielhaft genannten Verfahren klassifizieren die Haftfestigkeit lediglich, z.B. im Sinne kritischer Normallasten beim Ritz-Test oder typischer Versagensbilder beim Rockwell-C Test. Auch ist die Anwendung der verschiedenen Verfahren mit ihren sehr unterschiedlichen Beanspruchungsarten auf bestimmte Applikationen beschränkt. Für Hartstoffschichten sind der Ritz-Test und der Rockwell-C Test z.B. geeignete (harte Schicht auf hartem Substrat) Verfahren, für andere Applikationen (harte oder weiche Schicht auf weichem Substrat, z.B. Metallschichten auf Kunststoffen) sind sie dagegen ungeeignet.

Die Zugfestigkeit von Fügeverbindungen (Klebe-, Schweiß-, Löt-, Bond- und Pressverbindungen) wird dagegen auch routinemäßig in Zugprüfeinrichtungen untersucht. Hier steckt der präparative Aufwand schon im Produkt, d.h. der Fügestelle selbst; es muss lediglich eine angepasste Halterung hergestellt werden. Eine doppelt kardanische Aufhängung ist in der Regel auch hier Voraussetzung.

Ein Nachteil der bekannten Verfahren zur Prüfung der Haftfestigkeit von Beschichtungen besteht darin, dass bei allen Methoden außer dem Pull-off Test die Haftfestigkeit lediglich klassifiziert und nicht als physikalische Größe (Zahlenwert mit der Einheit Kraft/Fläche) bestimmt werden kann.

Des Weiteren sind die einzelnen Tests sehr auf bestimmte Schicht-Substrat-Kombinationen zugeschnitten. Der Radiergummi-Test z.B. wird vorwiegend für dielektrisch-optische Beschichtungen (Filter, AR- und HR-Systeme) eingesetzt, aber praktisch nicht einmal mehr für metallisch-optische Beschichtungen (Reflektoren).

Alle der erwähnten Tests (auch der Pull-off-Test) sind Einzelprüfungen, die auf eine spezifische Schicht-Substrat-Kombination (Substratmaterial, Schichtmaterial, Schichtdickenbereich, Haftfestigkeitsbereich) zugeschnitten sind bzw. angepasst werden müssen. Die Streuung der Ergebnisse ist bei allen Prüfungen groß und kann 50% und mehr erreichen.

Die Zugfestigkeit von Fügestellen kann mit der Zugprüfung als physikalische Größe (Zahlenwert mit der Einheit Kraft/Fläche) quantitativ, allerdings nur als Einzelprüfung und unter der Voraussetzung, dass ein beidseitiges Einspannen möglich ist, bestimmt werden. Für Mikro-Bauelemente sind diese Forderungen technisch und ökonomisch oft Ausschlusskriterien.

Es ist daher die Aufgabe der vorliegenden Erfindung, ein Verfahren zum Prüfen der Festigkeit einer Verbindung zwischen zwei Körpern, von denen der eine Körper eine geringe Masse aufweist, wobei eine entsprechende gerichtete Kraft auf die Verbindung bis zu deren Lösung ausgeübt wird und die Kraft durch die auf die im Abstand von einer Drehachse konzentrisch um diese gedrehte Verbindung wirkende Zentrifugalkraft gebildet wird, anzugeben, das mit geringem gerätemäßigem Aufwand die Prüfung einer relativ großen Anzahl von Verbindungen innerhalb kurzer ermöglicht, wobei das Ergebnis der Prüfung eine quantitative Aussage in Form einer für die Haft- oder Zugfestigkeit relevanten physikalischen Größe (mit der Einheit Kraft/Fläche) enthält.

Diese Aufgabe wird erfindungsgemäß gelöst durch ein Verfahren mit den Merkmalen des Anspruchs 1. Vorteilhafte Weiterbildungen dieses Verfahrens sowie eine bevorzugte Vorrichtung zur Durchführung dieses Verfahrens ergeben sich aus den Unteransprüchen.

Dadurch, dass auf den Körper geringer Masse auf der der Verbindung abgewandten Seite ein Prüfstempel aufgebracht wird, derart, dass die Haftfestigkeit in Richtung der Zentrifugalkraft zwischen dem Körper geringer Masse und dem Prüfstempel größer als diejenige zwischen dem Körper geringer Masse und dem anderen Körper ist, wird die Masse des Körpers geringer Masse für die Prüfung in vorgegebener Weise vergrößert, so dass schon relativ geringe Drehgeschwindigkeiten ausreichen, um eine für die Lösung der Verbindung erforderliche Zentrifugalkraft zu erzeugen. Daher kann beispielsweise für die Prüfung der Haftfestigkeit einer auf ein Substrat aufgebrachten Beschichtung eine handelsübliche Tischzentrifuge eingesetzt werden. Hierbei kann gleichzeitig eine größere Anzahl auch unterschiedlicher Verbindungen geprüft werden. Die Haftfestigkeit einer Verbindung ergibt sich aus der Zentrifugalkraft bei deren Lösung, die aus der Summe der Massen des abgelösten Körpers und des Prüfstempels, der Drehzahl und dem Abstand von der Drehachse bestimmbar ist.

Die Erfindung wird im Folgenden anhand eines in den Figuren dargestellten Ausführungsbeispiels näher erläutert. Diese zeigen in

Fig. 1    den Grundkörper einer Halterung für drei Prüflinge in der Vorderansicht, in

Fig. 2    den Grundkörper sowie den Halterungseinsatz für einen Prüfling im Querschnitt in Explosionsdarstellung, und in

Fig. 3    ein Blockschaltbild für die Erzeugung eines Signals bei der Lösung einer Verbindung sowie die Übertragung und Auswertung dieses Signals.

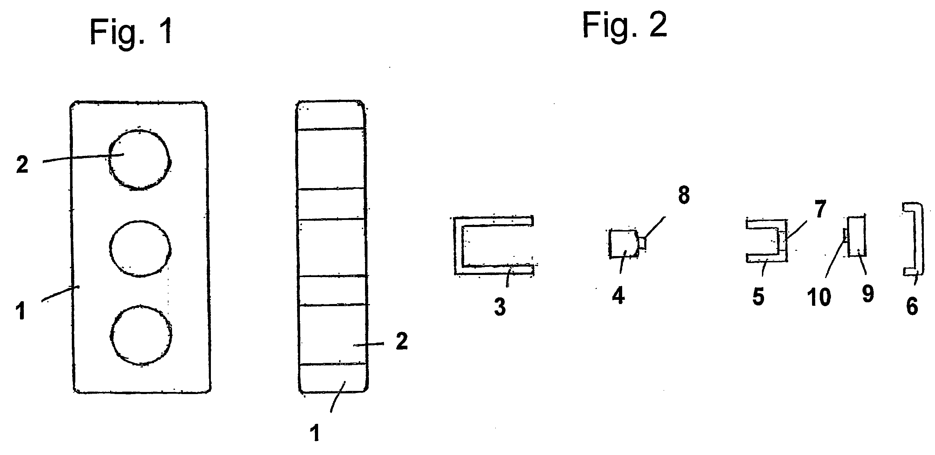

Der in Fig. 1 gezeigte Grundkörper 1 wird beispielsweise an der Innenwand des Trommelrotors einer Tischzentrifuge befestigt, wobei die zur Aufnahme je eines Halterungseinsatzes für einen Prüfling dienenden Bohrungen 2 in Richtung der Drehachse des Rotors übereinander angeordnet sind. Es werden mehrere, beispielsweise sechs derartige Grundkörper 1 in gleichen gegenseitigen Abständen entlang des Umfangs des Rotors rotationssymmetrisch an dessen Innenwand durch Klammern oder dergleichen befestigt.

Die Halterungseinsätze für jeweils einen Prüfling bestehen gemäß Fig. 2 aus einem äußeren Becher 3, einem Prüfstempel 4, einem inneren Becher 5 und einem Deckel 6.

Der äußere Becher 3 wird im Passsitz in eine Bohrung 2 des Grundkörpers 1 gesteckt, wobei er an der Innenwand der Trommel anliegt und auf der dieser abgewandten Seite über den Grundkörper 1 vorsteht.

Der innere Becher 5 enthält in seinem Boden eine zentrale Bohrung 7, durch die ein Ansatz des Prüfstempels 4 hindurchgesteckt wird. Außerhalb des Bechers 5 wird die durch die Bohrung 7 ragende Stirnfläche des Ansatzes 8 durch einen geeigneten Klebstoff ganzflächig mit einer auf ein Substrat 9 aufgebrachten Beschichtung 10 verbunden. Die Einheit aus Prüfstempel 4, Becher 5 und Prüfling 9, 10 wird anschließend in den äußeren Becher 3 geschoben und schließlich der Deckel 6 auf das offene Ende des Bechers 3 aufgesetzt.

Wenn nun alle oder je nach Bedarf ein Teil der Bohrungen 2 sämtlicher Grundkörper 1 mit den die Prüflinge enthaltenden Halterungseinsätzen gefüllt sind, kann die Prüfung der Festigkeit der Verbindungen zwischen den jeweiligen Substraten 9 und Beschichtungen 10 durchgeführt werden, indem der Trommelrotor der Zentrifuge in Drehung versetzt wird. Insbesondere dann, wenn nur ein Teil der Bohrungen 3 einen Prüfling enthält, ist darauf zu achten, dass keine Unwucht auftritt.

Bei der Drehung des Trommelrotors werden der Becher 5 durch den äußeren Becher 3 und das Substrat 9 durch den Becher 5 gehalten, und es wirkt eine zur zylindrischen Innenwand des Trommelrotors hin gerichtete Zentrifugalkraft als Zugkraft auf die Verbindungen zwischen Ansatz 8 des Prüfstempels 4 und Beschichtung 10 einerseits sowie zwischen Beschichtung 10 und Substrat 9 andererseits. Da die Festigkeit der Verbindung zwischen Beschichtung 10 und Substrat 9 geprüft werden soll, ist sicherzustellen, dass die Verbindung zwischen Ansatz 8 und Beschichtung 10 höheren Zugbelastungen widersteht als die Verbindung Beschichtung 10/Substrat 9. Der Prüfstempel 4 dient zur Bildung einer ausreichenden Zentrifugalkraft, da die Beschichtung 10 allein keine ausreichende Masse hat, um die für ihre Ablösung erforderliche Zugkraft zu erzeugen.

In Abhängigkeit von der Haftfestigkeit der Beschichtung 10 am Substrat 9 bzw. der Zugfestigkeit einer Fügeverbindung wird bei gegebenem Drehradius bei einer bestimmten Drehzahl das Versagen der Verbindung, d.h. das Ablösen der Kombination aus Prüfstempel 4 und Beschichtung 10 vom Substrat 9 bzw. die Trennung der beiden durch die Fügeverbindung verbundenen Körper auftreten. Diese Drehzahl kann elektrisch (als Unwucht-Ereignis) erfasst und durch spezielle Detektionssysteme (elektrisch, elektronisch, optisch oder akustisch) jeder Rotorposition und damit dem betreffenden Prüfling zugeordnet werden, ohne dass die Prüfung für die weiteren Prüflinge unterbrochen werden muss.

Es ist jedoch darauf zu achten, dass die auftretende Unwucht beim Ablösen nicht zu groß wird und im Akzeptanzbereich der Unwuchtkorrektur der jeweiligen Zentrifuge bleibt. Dies bedeutet auch, dass die auftretenden Flugwege und Auftreffkräfte beim Versagen minimal gehalten werden müssen. Andererseits müssen sie jedoch noch so groß sein, dass das Versagen eindeutig erkannt werden kann.

Das Ergebnis der Prüfung stellt eine quantitative Aussage in Form einer für die Haft- oder Zugfestigkeit relevanten physikalischen Größe (mit der Einheit Kraft/Fläche) dar.

Generell muss, damit eine Trennung zwischen Beschichtung und Substrat oder zwischen zwei Körpern erfolgt, die Zentrifugalkraft $F_Z$ größer als die Haftkraft $F_H$ der Beschichtung oder die Klebekraft $F_K$ der Fügeverbindung zwischen den beiden Körpern sein.

$$F_Z > F_H \text{ oder } F_K$$

Vorversuche mit Zugprüfungen lieferten für Verbindungen mit Hochleistungsklebstoffen eine maximale Klebefestigkeit von $\sigma_{K,max}$=50N/mm². Wirkt diese beispielsweise auf eine Fügefläche von ca. 7 mm², ergibt sich in diesem Falle eine maximale Klebekraft von

$$F_{H,max}=\underline{350N}$$

Die in einer üblichen Tischzentrifuge wirkende maximale Zentrifugalkraft ergibt sich bei einer Prüfstempelmasse m=2,5 g und einer maximalen Zentrifugalbeschleunigung von ca. $a_{max}$=16.400 g zu:

$$F_{Z,max}=m \cdot a_{max} = 0,0025 \text{ kg} \cdot 16.400 \cdot 9,81 ^m/_{s^2} = \underline{400N}$$

Somit können bei dem vorliegenden Beispiel Fügeverbindungen geprüft werden, deren Haftfestigkeit 50N/mm² nicht übersteigt. Grundsätzlich ist die Prüfung von Fügeverbindungen jedoch nicht auf diesen Bereich beschränkt, sondern die maximal prüfbare Haftfestigkeit ergibt sich hier durch die Leistungsfähigkeit der Zentrifuge, d.h., die maximale erreichbare Zentrifugalkraft.

Geht man auch bei der Klebeverbindung zwischen dem Prüfstempel 4 und der Beschichtung 10 von einer Haftfestigkeit von 50N/mm² aus, und nimmt weiterhin an, dass die Verbindungsflächen zwischen Prüfstempel 4 und Beschichtung 10 sowie zwischen Beschichtung 10 und Substrat 9 einander gleich sind, dann können alle Beschichtungen geprüft werden, deren Haftfestigkeit weniger als 50N/mm² beträgt. Dies gilt beispielsweise für alle durch Aufdampfen auf ein Glassubstrat aufgebrachten Schichten.

Es ist jedoch auch möglich, mit der gezeigten Vorrichtung nicht nur reine Zugkräfte, sondern auch Kombinationen von Zug- und Scherkräften oder sogar nur reine Scherkräfte, die auf die Verbindung einwirken, zu realisieren. Hierzu wird die Fläche der zu prüfenden Verbindung statt parallel zur Behntangente schräg oder sogar senkrecht zu dieser angeordnet wird. Derartige Prüfvorrichtungen sind im Stand der Technik extrem aufwendig, obwohl in der Praxis häufig Beanspruchungen mit Kombinationen aus Zug- und Schwerkräften auftreten. Bei der vorliegenden Vorrichtung ist nur der Einsatz auszuwechseln. Bei Verwendung unterschiedlicher Einsätze können Verbindungen gleichzeitig durch reine Zugkräfte, reine Scherkräfte und beliebige Kombinationen aus Zug- und Scherkräften beansprucht werden.

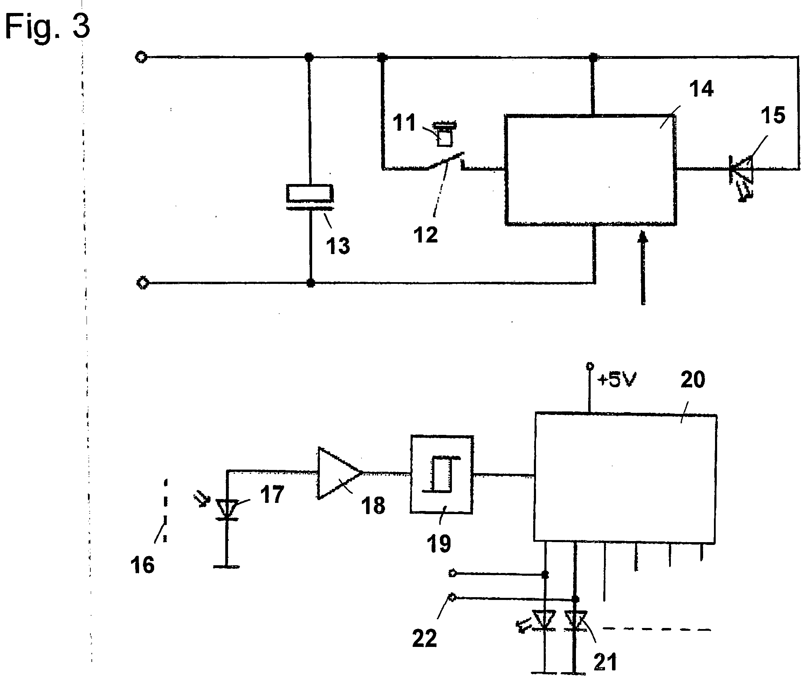

Fig. 3 zeigt im oberen Teil eine Schaltung zur Erzeugung und Übertragung eines die Lösung einer Verbindung anzeigenden Signals sowie im unteren Teil die Schaltung zum Empfang und zur Auswertung dieses Signals. Der obere Teil befindet sich in der Trommel einer Zentrifuge und der untere Teil stationär außerhalb der Trommel. Die Signalübertragung zwischen den beiden Teilen erfolgt drahtlos beispielsweise mittels Infrarotstrahlen.

Bei der Lösung der Verbindung zwischen den beiden Körpern eines Prüflings 11 wird ein Schalter 12 geschlossen, wodurch ein Kondensator 13 entladen wird. Der hierdurch über einen Codier-Schaltkreis 14 fließende Strom löst die Erzeugung eines Signals aus, das zu einer Infrarot-LED 15 geleitet wird, die ein entsprechendes Infrarot-Signal abgibt.

Das Infrarot-Signal gelangt über ein Infrarotfilter 16 zu einem Infrarotsensor 17 und das von diesem erzeugte elektrische Signal wird über einen Verstärker 18 zu einer Triggerschaltung 19 geführt. Der von dieser ausgegebene Triggerimpuls wird in einen Decodierer 20 eingegeben. Dessen Ausgangssignale dienen zur Erregung von LEDs 21 für die Anzeige des Lösungsvorgangs und können zu einer mit Anschlüssen 22 verbundenen Logikschaltung (nicht gezeigt) für die numerische Auswertung des Prüfvorgangs geführt werden.

Die gezeigte Schaltung hat den Vorteil eines geringen Energieverbrauchs, da ein Strom nur bei Auftreten des Lösungsvorgangs fließt. Daher ist ein Kondensator als Energiequelle ausreichend, so dass keine Leitungen zur Zuführung von Energie zu der Trommel während des Prüfvorgangs benötigt werden. Zudem ergibt die Verwendung von Infrarotstrahlen für die Signalübertragung ebenfalls einen sehr geringen Stromverbrauch.

Durch geeignete Programmierung können mit der Zentrifuge nahezu beliebige Rampen (Beschleunigungen und Verzögerungen) und Wechsellastzyklen realisiert werden. Dies ist insbesondere für die Ermüdungsprüfung von Bedeutung.

Schließlich besteht auch die Möglichkeit der Erzeugung gewünschter Klimabedingungen für den Prüfling. Die Ausbildung der Zentrifugentrommel als Klimakammer mit einer Einstellmöglichkeit für Temperatur- und Feuchtigkeitswerte erfordert bei einer Tischzentrifuge nur einen relativ geringen apparativen Mehraufwand.

**Patentansprüche**

1. Verfahren zum Prüfen der Festigkeit einer Verbindung zwischen zwei Körpern (9, 10), von denen der eine Körper (10) eine geringe Masse aufweist, wobei eine entsprechende gerichtete Kraft auf die Verbindung bis zu deren Lösung ausgeübt und die Kraft durch die auf die im Abstand von einer Drehachse konzentrisch um diese gedrehte Verbindung wirkende Zentrifugalkraft gebildet wird, wobei auf den Körper (10) geringer Masse auf der der Verbindung abgewandten Seite ein Prüfstempel (4) aufgebracht wird, derart, dass die Haftfestigkeit in Richtung der Zentrifugalkraft zwischen dem Körper (10) geringer Masse und dem Prüfstempel (4) größer als diejenige zwischen dem Körper (10) geringer Masse und dem anderen Körper (9) ist, **dadurch gekennzeichnet, dass** die Zentrifugalkraft mittels einer Zentrifuge mit einem Trommelrotor erzeugt wird, an dessen zylindrischer, zur Drehachse konzentrischer Innenwand mehrere Prüflinge (9, 10) mit jeweils einer zu prüfenden Verbindung in Umfangsrichtung verteilt und/oder in Richtung der Drehachse übereinander angeordnet sind.

2. Verfahren nach Anspruch 1, **dadurch gekennzeichnet, dass** nur der von der Verbindung aus betrachtet der Drehachse zugewandte Körper (9) gegen eine Bewegung in Richtung der Zentrifugalkraft gehalten wird.

3. Verfahren nach Anspruch 1 oder 2, **dadurch gekennzeichnet, dass** der Körper geringer Masse eine auf den anderen Körper (9) aufgebrachte Beschichtung (10) ist.

4. Verfahren nach einem der Ansprüche 1 bis 3, **dadurch gekennzeichnet, dass** die Verbindung zwischen den beiden Körpern (9, 10) flächig ist und unter einem Winkel zwischen 0 und 90 zu der Richtung der Zentrifugalkraft verläuft.

5. Verfahren nach einem der Ansprüche 1 bis 4, **dadurch gekennzeichnet, dass** die Lösung der Verbindung elektrisch erfasst wird.

6. Verfahren nach Anspruch 5, **dadurch gekennzeichnet, dass** durch die Lösung der Verbindung die Entladung eines Kondensators ausgelöst wird.

7. Verfahren nach Anspruch 5 oder 6, **dadurch gekennzeichnet, dass** das die Lösung der Verbindung anzeigende Signal drahtlos zu einer Auswertungseinheit übertragen wird.

8. Verfahren nach einem der Ansprüche 1 bis 7, **dadurch gekennzeichnet, dass** die auf die Verbindung wirkende Kraft in ihrer Größe und ihrer Änderungsgeschwindigkeit in gewünschter Weise geändert wird.

9. Verfahren nach einem der Ansprüche 1 bis 8, **dadurch gekennzeichnet, dass** die Verbindung gewünschten Klimabedingungen ausgesetzt wird.

10. Vorrichtung zur Durchführung des Verfahrens nach einem der Ansprüche 1 bis 9, **dadurch gekennzeichnet, dass** eine Zentrifuge mit einem Trommelrotor vorgesehen ist, an dessen zylindrischer, zur Drehachse konzentrischer Innenwand mehrere Prüflinge (9, 10) mit jeweils einer zu prüfenden Verbindung in Umfangsrichtung verteilt und/oder in Richtung der Drehachse übereinander angeordnet sind.

11. Vorrichtung nach Anspruch 10, **dadurch gekennzeichnet, dass** an der Innenwand des Trommelrotors einer Zentrifuge in Umfangsrichtung rotationssymmetrisch verteilt Aufnahmekörper (1) mit jeweils mindestens einer in radialer Richtung des Trommelrotors verlaufenden Bohrung (2) für die Aufnahme eines Einsatzes zur Halterung eines Prüflings (9, 10) angeordnet sind.

12. Vorrichtung nach Anspruch 11, **dadurch gekennzeichnet, dass** jeder Aufnahmekörper (1) mehrere in Richtung der Drehachse übereinander angeordnete Bohrungen (2) aufweist.

**13.** Vorrichtung nach Anspruch 11 oder 12, **dadurch gekennzeichnet, dass** der Einsatz aus einem in der Bohrung (2) aufgenommenen, in radialer Richtung des Trommelrotors bei

- dessen Drehung fixierten, äußeren Becher (3) und einem konzentrisch in dem äußeren Becher (3) aufgenommenen und bei Drehung des Trommelrotors in dessen radialer Richtung durch den äußeren Becher (3) fixierten inneren Becher (5) besteht.

**14.** Vorrichtung nach Anspruch 13, **dadurch gekennzeichnet, dass** der Prüfling (9, 10) mittels einer im Boden des inneren Bechers (5) ausgebildeten Öffnung (7) an diesem gehalten ist.

**15.** Vorrichtung nach Anspruch 14, **dadurch gekennzeichnet, dass** der Prüfling aus einem mit einer Beschichtung (10) versehenen Substrat (9) besteht, das sich auf einer Seite der Öffnung (7) befindet, und dass auf der anderen Seite der Öffnung (7) innerhalb des inneren Bechers (5) ein Prüfstempel (4) angeordnet ist, der durch die Öffnung (7) hindurchgreifend mit der Beschichtung (10) fest verbunden ist.

**16.** Vorrichtung nach einem der Ansprüche 10 bis 15, **dadurch gekennzeichnet, dass** sie als Tischzentrifuge ausgebildet ist.

**Claims**

**1.** A method for examining the resistance of a connection between two bodies (9, 10) of which one body (10) has a small mass, a corresponding directed force being exerted upon the connection until disconnection thereof, and the force being formed by the centrifugal force acting at a distance from a rotational axis in a concentric manner about said rotated connection, an examining stamp (4) being applied on the body (10) having the small mass on the side oriented away from the connection, such that the adhesion in the direction of the centrifugal force between the body (10) having the small mass and the examining stamp (4) is greater than that between the body (10) having the small mass and the other body (9), **characterized in that** the centrifugal force is generated by means of a centrifuge with a drum rotor on whose cylindrical inner wall, which is concentric to the rotational axis, several test samples (9, 10), each with a connection to be examined, are distributed in circumferential direction and/or are arranged one on top of the other in the direction of the rotational axis.

**2.** A method according to claim 1, **characterized in that** only the body (9) oriented towards the rotational axis, when seen from the connection, is maintained against a movement in the direction of the centrifugal force.

**3.** A method according to claim 1 or 2, **characterized in that** the body having a small mass is a coating (10) applied on the other body (9).

**4.** A method according to any one of claims 1 to 3, **characterized in that** the connection between the two bodies (9, 10) is plane, and extends under an angle between 0 and 90 to the direction of the centrifugal force.

**5.** A method according to any one of claims 1 to 4, **characterized in that** the disconnection of the connection is electrically detected.

**6.** A method according to claim 5, **characterized in that** by disconnection of the connection the discharge of a capacitor is triggered.

**7.** A method according to claim 5 or 6, **characterized in that** the signal indicating the disconnection of the connection is transmitted in a wireless manner to an evaluation unit.

**8.** A method according to any one of claims 1 to 7, **characterized in that** the force acting on the connection in its magnitude and in its rate of change is changed as desired.

**9.** A method according to any one of claims 1 to 8, **characterized in that** the connection is exposed to desired climate conditions.

**10.** A device for performance of the method according to any one of claims 1 to 9, **characterized in that** a centrifuge with a drum rotor is provided, on whose cylindrical inner wall, which is concentric to the rotational axis, several test samples (9, 10), each with a connection to be examined, are distributed in circumferential direction and/or are arranged one on top of the other in the direction of the rotational axis.

11. A device according to claim 10, **characterized in that** on the inner wall of the drum rotor of a centrifuge in circumferential direction and distributed in a rotationally symmetrical manner, holders (1) with at least one bore (2) each extending in radial direction of the drum rotor are arranged to hold an insert for attachment of a test sample (9, 10).

12. A device according to claim 11, **characterized in that** each holder (1) comprises several bores (2) arranged on top of each other in the direction of the rotational axis.

13. A device according to claim 11 or 12, **characterized in that** the insert is comprised of an outer cup (3) received in the bore (2) and fixed in radial direction of the drum rotor at its rotation, and an inner cup (5) received concentrically in the outer cup (3) and fixed by the outer cup (3) at rotation of the drum rotor in its radial direction.

14. A device according to claim 13, **characterized in that** the test sample (9, 10) is held by an inner cup (5) via an opening (7) formed in the bottom of said cup.

15. A device according to claim 14, **characterized in that** the test sample is comprised of a substrate (9) provided with a coating (10), which is located on one side of the opening (7), and that on the other side of the opening (7) within the inner cup (5) an examining stamp (4) is arranged which is firmly connected with the coating (10) by reaching through the opening (7).

16. A device according to any one of claims 10 to 15, **characterized in that** it is formed as a tabletop centrifuge.

**Revendications**

1. Procédé pour contrôler la résistance d'une liaison entre deux corps (9, 10) dont l'un corps (10) a une masse faible, une force dirigée correspondante étant exercée sur la liaison jusqu'à sa déconnexion, et la force étant formée à l'aide de la force centrifuge agissant à distance d'un axe de rotation de façon concentrique autour de ladite liaison tournée, un tampon de contrôle (4) étant apposé au corps (10) avec la masse faible sur le côté orienté opposé de la liaison de manière à ce que l'adhérence dans la direction de la force centrifuge entre le corps (10) avec la masse faible et le tampon de contrôle (4) est plus grande que celle entre le corps (10) avec la masse faible et l'autre corps (9), **caractérisé en ce que** la force centrifuge est générée par une centrifugeuse avec un rotor à tambour sur la paroi intérieure cylindrique duquel, qui est concentrique à l'axe de rotation, plusieurs éprouvettes (9, 10), chacune avec une liaison à être contrôlée, sont distribuées dans le sens circonférentiel et/ou disposée l'une sur l'autre dans la direction de l'axe de rotation.

2. Procédé selon la revendication 1, **caractérisé en ce que** seulement le corps (9) orienté vers l'axe de rotation, vu de la liaison, est maintenu contre un mouvement dans la direction de la force centrifuge.

3. Procédé selon la revendication 1 ou 2, **caractérisé en ce que** le corps avec la masse faible est un revêtement (10) appliqué à l'autre corps (9).

4. Procédé selon l'une quelconque des revendications 1 à 3, **caractérisé en ce que** la liaison entre les deux corps (9, 10) est plate, et s'étend sous un angle entre 0 et 90 par rapport à la direction de la force centrifuge.

5. Procédé selon l'une quelconque des revendications 1 à 4, **caractérisé en ce que** la déconnexion de la liaison est détectée électriquement.

6. Procédé selon la revendication 5, **caractérisé en ce que** par déconnexion de la liaison la décharge d'un condensateur est déclenchée.

7. Procédé selon la revendication 5 ou 6, **caractérisé en ce que** le signal indiquant la déconnexion de la liaison est transmis sans fil à une unité d'évaluation.

8. Procédé selon l'une quelconque des revendications 1 à 7, **caractérisé en ce que** la force agissant sur la liaison dans son ampleur et dans sa vitesse de changement est modifiée de la manière voulue.

**9.** Procédé selon l'une quelconque des revendications 1 à 8, **caractérisé en ce que** la liaison est soumise à des conditions climatiques souhaitées.

**10.** Dispositif pour la mise en oeuvre du procédé selon l'une quelconque des revendications 1 à 9, **caractérisé en ce qu'** un centrifugeuse avec un rotor à tambour est prévu sur la paroi intérieure cylindrique duquel, qui est concentrique à l'axe de rotation, plusieurs éprouvettes (9, 10), chacune avec une liaison à être contrôlée, sont distribuées dans le sens circonférentiel et/ou disposée l'une sur l'autre dans la direction de l'axe de rotation.

**11.** Dispositif selon la revendication 10, **caractérisé en ce que** sur la paroi intérieure du rotor à tambour d'un centrifugeuse dans le sens circonférentiel et distribués à symétrie de rotation des corps récepteur (1) avec au moins un alésage (2) chacun s'étendant dans une direction radiale du rotor à tambour sont disposés pour supporter une insertion pour la fixation d'une éprouvette (9, 10).

**12.** Dispositif selon la revendication 11, **caractérisé en ce que** chaque corps récepteur (1) comporte plusieurs alésages (2) disposés l'un sur l'autre dans la direction de l'axe de rotation.

**13.** Dispositif selon la revendication 11 ou 12, **caractérisé en ce que** l'insertion comporte un gobelet extérieur (3) reçu dans l'alésage (2) et fixé dans la direction radial du rotor à tambour au cours de sa rotation, et un gobelet intérieur (5) reçu de façon concentrique dans le gobelet extérieur (3) et fixé par le gobelet extérieur (3) au cours de la rotation du rotor à tambour dans sa direction radiale.

**14.** Dispositif selon la revendication 13, **caractérisé en ce que** l'éprouvettes (9, 10) est supportée par un gobelet intérieur (5) à travers une ouverture (7) formée dans le fond dudit gobelet.

**15.** Dispositif selon la revendication 14, **caractérisé en ce que** l'éprouvettes comporte un substrat (9) doté d'un revêtement (10) qui se trouve sur un côté de l'ouverture, et que sur l'autre côté de l'ouverture dans le gobelet intérieur un tampon de contrôle (4) est disposé fermement lié avec le revêtement (10) en traversant l'ouverture (7).

**16.** Dispositif selon l'une quelconque des revendications 10 à 15, **caractérisé en ce qu'**elle est formé en tant que centrifugeuse de table.

# Fig. 1

# Fig. 2

EP 1 812 780 B1

Fig. 3

EP 1 812 780 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4143543 A